(19) **Europäisches Patentamt European Patent Office Office européen des brevets**

(11) **EP 4 787 738 A1**

(12) **EUROPEAN PATENT APPLICATION**

(43) Date of publication:
**05.08.2026 Bulletin 2026/32**

(21) Application number: **25155060.4**

(22) Date of filing: **30.01.2025**

(51) International Patent Classification (IPC):
**H04B 10/40** (2013.01)

(52) Cooperative Patent Classification (CPC):
**H04B 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Deutsche Telekom AG 53113 Bonn (DE)**

(72) Inventor: **NÖCKEL, Philipp 53721 Siegburg (DE)**

(74) Representative: **RDL Patentanwälte PartG mbB Senefelderstrasse 26 70176 Stuttgart (DE)**

Remarks:
Amended claims in accordance with Rule 137(2) EPC.

(54) **AN OPTIC TERMINAL FOR AN OPTIC NETWORK**

(57) An optic terminal for an optic network, comprising a first optic receiver, RX, port, a first optic transmitter, TX, port, a second optic RX port, a second optic TX port and an optic engine connected to the first optic RX port, the first optic TX port, the second optic RX port and the second optic TX port, further comprising an electric plug and a digital signal processor, DSP, connected to the electric plug and the optic engine; an optic terminal stack for an optic network, an optic terminal stack arrangement for an optic network, an optic network, a method for operating an optic terminal and a method for operating an optic network.

Fig. 1

**Description**

The invention relates to an optic terminal for an optic network, comprising a first optic receiver, RX, port, a first optic transmitter, TX, port, a second optic RX port, a second optic TX port and an optic engine connected to the first optic RX port, the first optic TX port, the second optic RX port and the second optic TX port, further comprising an electric plug and a digital signal processor, DSP, connected to the electric plug and the optic engine. The invention further relates to an optic terminal stack for an optic network, an optic terminal stack arrangement for an optic network, an optic network, a method for operating an optic terminal and a method for operating an optic network.

Optic terminals of the above-mentioned type form part of the state of the art as different embodiments and are used to convert optic signals to electric signals and vice versa, the optic signals received from and transmitted to a central office, CO, of an optic network, respectively, via optic cables. The optic terminals may be either active, e.g., transponders or multiplexers/demultiplexers, MUX/DEMUX, or passive, e.g., passive wavelength division multiplexers, pWDM. Generally, the optic terminals allow different optic signals for converging, i.e., reducing a number of optic cables required by the optic signals.

The optic terminals are usually located in business environments and data centers demanding a high-speed data communication, the business environments and data centers being referred to as customers of the optic network herein. The high-speed data communication may comprise internet services like cloud services, distributed applications, video conferencing, internet of things, IoT, services to name only a few, the internet services causing a data traffic of the high-speed data communication.

A customer usually uses a plurality of different internet services provided by a plurality of different service providers. Accordingly, the customer often hosts a plurality of different optical terminals and, hence, faces a high complexity of optic termination which is inflexible, error-prone, space-occupying, power-hungry and expensive. Said deficiencies of the traditional optic termination even worsen as information technology is evolving, thereby requiring almost always new optic terminals. In some cases, outdated and eventually useless optic terminals are not even removed and switched off and, hence, further increase a shortage of space and consumption of power.

It is, therefore, an object of the invention to provide an optic terminal for an optic network which is flexible, less complex, less space-occupying, less power-hungry and future-proof at low costs. Further objects of the invention are to provide an optic terminal stack for an optic network, an optic terminal stack arrangement for an optic network and an optic network and to suggest a method for operating an optic terminal and a method for operating an optic network.

A first aspect of the invention is an optic terminal for an optic network, comprising a first optic receiver, RX, port, a first optic transmitter, TX, port, a second optic RX port, a second optic TX port and an optic engine connected to the first optic RX port, the first optic TX port, the second optic RX port and the second optic TX port, further comprising an electric plug and a digital signal processor, DSP, connected to the electric plug and the optic engine. The electric plug may be plugged into a corresponding electric port of a computing device.

The optic terminal has two pairs of optic ports, i.e., a first pair of optic ports and a second pair of optic ports, each pair of optic ports consisting of an optic RX port and an optic TX port. The DSP may be implemented as an application-specific integrated circuit, ASIC. The optic engine and the DSP together provide a bidirectional interface between optic signals and electric signals.

It is noted that the terms "first" and "second", herein, are chosen for distinguishing identical items and do not imply any technical difference.

According to the invention, an input side of a first optic splitter of the optic terminal is connected to the first optic RX port and an output side of the first optic splitter is connected the optic engine and the second optic TX port and an input side of a first optic combiner of the optic terminal is connected to the optic engine and the second optic RX port and an output side of the first optic combiner is connected to the first optic TX port. The first optic splitter and the first optic combiner provide the optic terminal with a loop-through functionality, i.e., an optic signal received via the first optic RX port can be partially forwarded to the second optic TX port. Correspondingly, an optic signal received via the second optic RX port can be forwarded to the first optic TX port. The loop-through functionality allows for stacking a plurality of optic terminals, i.e., forming a series or cascade of optic terminals with each optic terminal plugged into a corresponding electric port of a different computing device.

The possibility of stacking provides the customer with a very flexibility and a high simplicity of optic termination which allows the optic termination for extending with increasing demands, i.e., for being scaled in the future. The optic terminal may also be readily replaced by an upgraded new version thereof in case the optic ports and the electric plug are maintained which also renders the optic terminal future-proof. Apart from that, as the inventive optic terminal can be configured small, each optic terminal occupies little space.

The optic splitter and the optic combiner are passive couplers having a first side with a single optic connector and a second side with a pair of optic connectors. The optic splitter and the optic combiner do not consume any additional energy, i.e., a power consumption of the optic terminal is not increased by the additional optic splitter and optic combiner.

The splitter has a single optic input connector and a pair of optic output connectors, the single optic input connector and the pair of optic output connectors rendering the first side an input side of the splitter and the second side an output side of the splitter. In contrast, the combiner has a pair of optic input connectors and a single optic output connector, the pair of optic input connectors and the single optic output connectors rendering the second side an input side of the combiner and the first side an output side of the combiner. In other words, the optic splitter and the optic combiner may be identical passive binary optic couplers just having opposite orientations.

In an embodiment, the input side of the first optic splitter is connected to the first optic RX port via a second optic combiner of the optic terminal, an output side of the second optic combiner connected to the input side of the first optic splitter and an input side of the second optic combiner connected to the first optic RX port. The second optic combiner allows for passing an additional optic signal to the optic engine.

In an embodiment, the input side of the first optic combiner is connected to the second optic RX port via a second optic splitter of the optic terminal, an input side of the second optic splitter connected to the second optic RX port and an output side of the second optic splitter connected to the input side of the first optic combiner and to an input side of the second optic combiner. The second optic splitter allows for passing an optic signal received via the second optic RX port as the additional optic signal to the optic engine. As a result, the second optic RX port may be used instead of the first optic RX port in case there is a malfunction related to the first optic RX function.

In an embodiment, the output side of the first optic combiner is connected to the first optic TX port via a third optic splitter of the optic terminal, an input side of the third optic splitter connected to the output side of the fist optic combiner and an output side of the third optic splitter connected to the first optic TX port. The third optic splitter allows for additionally using an optic signal of the optic engine.

In an embodiment, the output side of the first optic splitter is connected to the second optic TX port via a third optic combiner of the optic terminal, an output side of the third optic combiner connected to the second optic TX port and an input side of the third optic combiner connected to the output side of the first optic splitter and an output side of the third optic splitter. The third optic combiner allows for passing the additionally used optic signal of the optic engine to the second optic TX port. As a result, the second optic TX port may be used instead of the first optic TX port in case there is a malfunction related to the first optic TX port.

Each optic splitter is configured for providing a splitting ratio of 90/10 or 95/5. The splitting ratio of 90/10 can be chosen for a relatively small number of stacked optic terminals, e.g., at most 10 stacked optic terminals, while the splitting ratio of 95/5 can be chosen for a relatively large number of stacked optic terminals, e.g., more than 10 stacked optic terminals.

Additionally or alternatively, each optic splitter and/or each optic combiner is configured as a 3 dBm optic coupler. A 3 dBm optic coupler has four optic ports one of which may be provided with a 3 dBm optic terminator in order to get an optic splitter or an optic combiner for the optic terminal.

Advantageously, the optic terminal comprises a housing, the optic engine, the DSP, each optic splitter and each optic combiner arranged within the housing and each optic port and the electric plug arranged on the housing. For instance, the housing may correspond to a housing of a quad small form factor pluggable double density, QSFP-DD, or a QSFP-28 supporting 100G digital coherent optic, DCO.

A second aspect of the invention is an optic terminal stack for an optic network, comprising a plurality of optic terminals according to an embodiment of the invention, wherein second optic ports of each optic terminal are connected to first optic ports of a successive optic terminal. The plurality of stacked optic terminals forms a series or cascade of optic terminals. The optic terminal stack allows for the optic termination to be readily scaled regarding a number of computing devices.

A third aspect of the invention is an optic terminal stack arrangement for an optic network, comprising at least two optic terminal stacks according to an embodiment of the invention, wherein second optic ports of a first optic terminal stack are connected to first optic ports of a second optic terminal stack. The at least two optical terminal stacks may be arranged at a spatial distance. The optic terminal stack arrangement allows for the optic termination to be readily scaled regarding a number of computing devices and a number of locations.

A fourth aspect of the invention is an optic network, comprising a central office, CO, and a pair of optic cables connected to the CO and plugged into first optic ports of an optic terminal according to an embodiment of the invention. The optic network may, of course, comprise a plurality of COs and a plurality of optic terminals, each optic terminal linked to a CO via a pair of optic cables. The optic cables may be single mode fibers, SMF.

The pair of optic cables may be plugged into first optic ports of an optic terminal stack according to an embodiment of the invention. The optic terminal stack may be linked to the CO instead of a single optic terminal, thus, allowing the customer for operating a plurality of different computing devices.

The pair of optic cables may also be plugged into first optic ports of an optic terminal stack arrangement according to an embodiment of the invention. The optic terminal stack arrangement may be linked to the CO instead of a single optic terminal, thus allowing the customer for operating at least two groups of different computing devices, the at least two groups being arranged at a spatial distance.

Each optic terminal may be provided, i.e., delivered in combination with a pair of optic cables or in combination with two pairs of optic cables. A first pair of optic cables is for linking the optic terminal to the CO, i.e., for a primary transmission. A second pair of optic cables is for replacing the first pair in case of a failure of the first pair, i.e., for being used as a backup, or for being used as an optic patch cable connecting two optic terminals.

A fifth aspect of the invention is a method for operating an optic terminal, wherein a first optic splitter of an optic terminal splits an optic signal received from a first optic receiver, RX, port of the optic terminal in a use part and a loop-through part and forwards the use part to an optic engine of the optic terminal and the loop-through part to a second optic terminal, TX, port of the optic terminal; a first optic combiner of the optic terminal combines respective optical signals received from the optic engine and a second optic RX port of the optic terminal and forwards the combined optical signals to a first optic TX port of the optic terminal; and a digital signal processor, DSP, of the optic terminal converts the use part of the optic signal to an electric signal and provides the electric plug with the electric signal and/or converts an electric signal received from the electric plug to an optic signal and provides the optic engine with the converted optic signal. The optic terminal is operated as a transceiver allowing for operating a plurality of stacked optic terminals and computing devices of a customer to be linked to a CO via a single pair of optic cables. Favorably, the optic terminal is an optic terminal according to an embodiment of the invention.

A sixth aspect of the invention is a method for operating an optic network, wherein a central office, CO, of an optic network transmits optic signals via an optic cable to a first optic terminal and receives optic signals via an optic cable from the first optic terminal.

According to the invention the first optic terminal forwards the optic signals received from the CO to a second optic terminal and optic signals received from the second optic terminal to the CO. Favorably, the first optic terminal and the second optic terminal are optic terminals according to an embodiment of the invention.

The CO may preamplify the optic signals to be transmitted having a power of light of at least 0 dBm. The power of light of 0 dBm corresponds to a power of light of 1 mW. Of course, the optic signals may be preamplified to a power of light above 1 mW in order to ensure that even the last optic terminal of a plurality of stacked optic terminals receives a sufficient power of light.

It is an essential advantage of the inventive optic terminal that it allows for an optic termination being flexible, less complex, less space-occupying, less power-hungry and future-proof at low costs.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.

Fig. 1 schematically shows an entity diagram of an optic terminal according to a first embodiment of the invention for an optic network;

Fig. 2 schematically show an entity diagram of an optic terminal according to a second embodiment of the invention for an optic network;

Fig. 3 schematically shows a perspective view of an optic terminal stack according to an embodiment of the invention for an optic network.

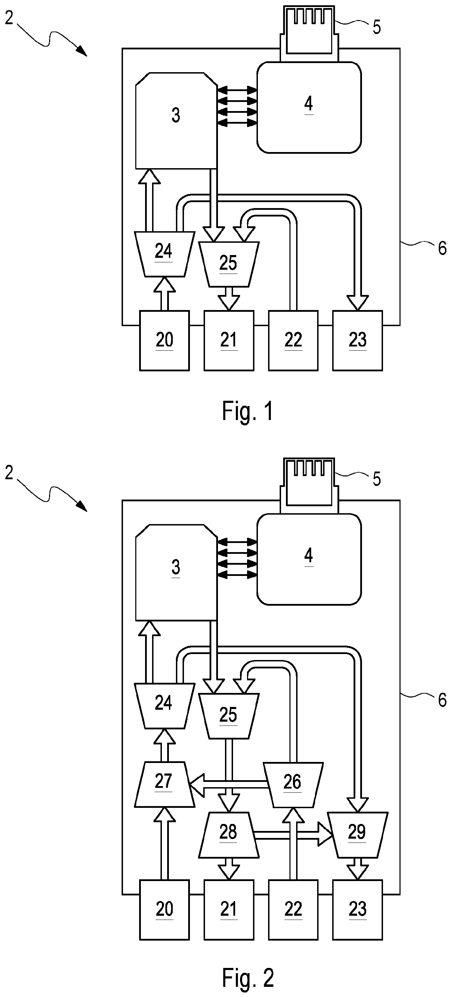

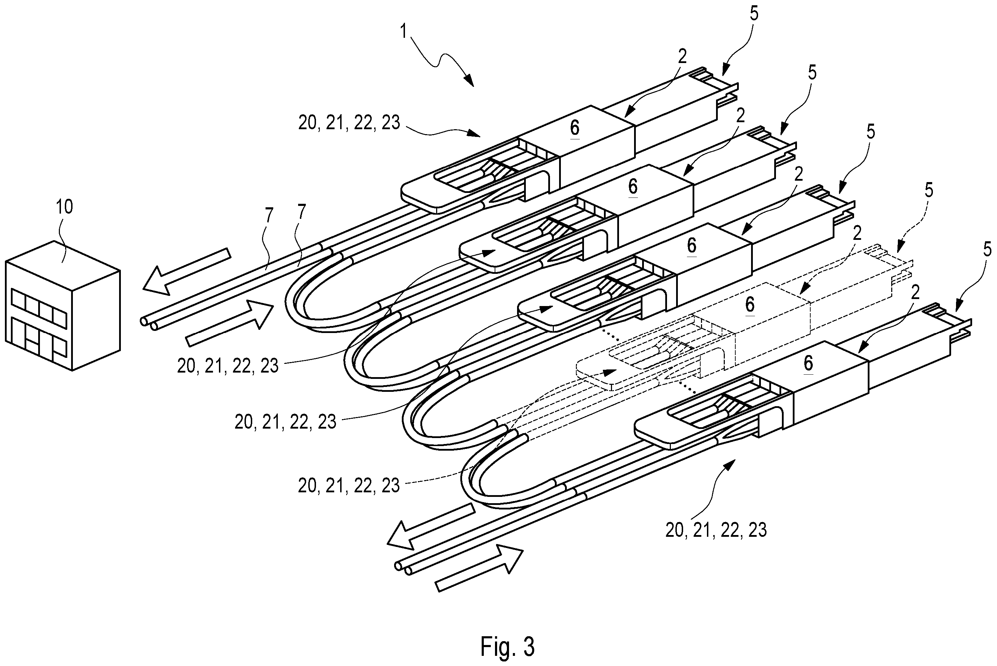

Fig. 1 schematically shows an entity diagram of an optic terminal 2 according to a first embodiment of the invention for an optic network 1 (see fig. 3). The optic terminal 2 comprises a first optic receiver, RX, port 20, a first optic transmitter, TX, port 21, a second optic RX port 22, a second optic TX port 23 and an optic engine 3 connected to the first optic RX port 20, the first optic TX port 21, the second optic RX port 22 and the second optic TX port 23.

The optic terminal 2 further comprises an electric plug 5 and a digital signal processor, DSP, 4 connected to the electric plug 5 and the optic engine 3.

The optic terminal 2 comprises a first optic splitter 24, an input side of which is connected to the first optic RX port 20 and an output side of which is connected to the optic engine 3 and the second optic TX port 23. The optic terminal also comprises a first optic combiner 25, an input side of which is connected to the optic engine 3 and the second optic RX port 22 and an output side of which is connected to the first optic TX port 21.

Fig. 2 schematically show an entity diagram of an optic terminal 2 according to a second embodiment of the invention for an optic network 1 (see fig. 3). A basic structure of the optic terminal 2 equals the optic terminal shown in fig. 1.

Additionally, the optic terminal 2 comprises a second optic combiner 27. The input side of the first optic splitter 24 is connected to the first optic RX port 20 via the second optic combiner 27 of the optic terminal 2. An output side of the second optic combiner 27 is connected to the input side of the first optic splitter 24. An input side of the second optic combiner 27 is connected to the first optic RX port 20.

Additionally, the optic terminal 2 comprises a second optic splitter 26. The input side of the first optic combiner 25 is connected to the second optic RX port 22 via the second optic splitter 26 of the optic terminal 2. An input side of the second optic splitter 26 is connected to the second optic RX port 22. An output side of the second optic splitter 26 connected to the input side of the first optic combiner 25 and to an input side of the second optic combiner 27.

Additionally, the optic terminal 2 comprises a third optic splitter 28. The output side of the first optic combiner 25 is connected to the first optic TX port 21 via the third optic splitter 28 of the optic terminal 2. An input side of the third optic splitter 28 is connected to the output side of the fist optic combiner 25 and an output side of the third optic splitter 28 is connected to the first optic TX port 21.

Additionally, the optic terminal 2 comprises a third optic combiner 29. The output side of the first optic splitter 24 is connected to the second optic TX port 23 via the third optic combiner 29 of the optic terminal 2. An output side of the third optic combiner 29 is connected to the second optic TX port 23. An input side of the third optic combiner 29 is connected to the output side of the first optic splitter 24 and an output side of the third optic splitter 28.

Referring now to figs. 1 and 2, each optic splitter 24, 26, 28 may be configured for providing a splitting ratio of 90/10 or 95/5. Apart from that, each optic splitter 24, 26, 28 and/or each optic combiner 25, 27, 29 may be configured as a 3 dB optic coupler.

The optic terminal 2 preferably comprises a housing 6. The optic engine 3, the DSP 4, each optic splitter 24, 26, 28 and each optic combiner 25, 27, 29 may be arranged within the housing 6. Each optic port 20, 21, 22, 23 and the electric plug 5 may be arranged on the housing 6.

The optic terminal is operated in a method according to an embodiment of the invention as follows.

The first optic splitter 24 of the optic terminal 2 splits the optic signal received from the first optic receiver, RX, port 20 of the optic terminal 2 in a use part and a loop-through part and forwards the use part to the optic engine 3 of the optic terminal 2 and the loop-through part to the second optic terminal, TX, port 23 of the optic terminal 2.

The first optic combiner 25 of the optic terminal 2 combines respective optical signals received from the optic engine 3 and a second optic RX port 22 of the optic terminal 2 and forwards the combined optical signals to a first optic TX port 21 of the optic terminal 2.

The digital signal processor, DSP, 4 of the optic terminal 2 converts the use part of the optic signal to an electric signal and provides the electric plug 5 with the electric signal. Additionally or alternatively, the DSP 4 converts an electric signal received from the electric plug 5 to an optic signal and provides the optic engine 3 with the optic signal.

The optic terminal 2 may form part of an optic network 1. The optic network 1 comprises a central office, CO, 10 and a pair of optic cables 7 connected to the CO 10 and plugged into first optic ports 20, 21 of the optic terminal 2 (see fig. 3).

Fig. 3 schematically shows a perspective view of an optic terminal stack according to an embodiment of the invention for an optic network 1. The optic terminal stack comprises a plurality of optic terminals 2 according to an embodiment of the invention. Second optic ports 22, 23 of each optic terminal 2 are connected to first optic ports 20, 21 of a successive optic terminal 2.

The optic terminal stack forms part of the optic network 1. The pair of optic cables 7 may be plugged into first optic ports 20, 21 of the optic terminal stack.

Exemplarily, an optic terminal stack comprising 9 optic terminals 2 is considered. An output power of light $P_{out}$ can be generally calculated according to:

$$P_{out} = P_0 - \left(a * D + N * \left(L_{cpl} + L_c\right)\right),$$

wherein $P_0$ is a power of light in *dBm* provided by the CO 10, a is fiber attenuation coefficient in *dBm/km* of the optic cables 7, *D* is a length in *km* of the optic cables 7 between the CO 10 and the first optic terminal 2, N is a number of optic terminals 2 of the stack, $L_{cpl}$ is a coupler loss in *dB* per optic terminal 2 and $L_c$ is a cable loss in *dB* between two optic terminals 2, i.e., a cable loss of optic patch cables connecting two neighboring optic terminals 2 of the stack. With typical values

*P0 = 0 dBm, a = 0,25 dB/km, D = 20 km, N = 9, $L_{cpl}$ = 0,458 dB, $L_c$ = 0,5 dB*

the output power of light $P_{out}$ is calculated to be about -17,22 *dBm* as compared to -30 *dBm* which is still an acceptable input power for an optic terminal 2. Another optic terminal stack (not shown) may be connected to the second optic ports of the illustrated optic terminal stack. Of course, an Erbium doped fiber amplifier, EDFA, (not shown) may be inserted between the optic terminal stacks in order to increase a power of light for the second optic terminal stack.

The optic terminal stack may form part of an optic terminal stack arrangement (not shown) for the optic network 1. The optic terminal stack arrangement comprises at least two optic terminal stacks according to the invention. Second optic ports 22, 23 of a first optic terminal stack are connected to first optic ports 20, 21 of a second optic terminal stack.

The optic terminal stack arrangement may form part of the optic network 1. The pair of optic cables 7 may be plugged into first optic ports 20, 21 of the optic terminal stack arrangement.

The optic network 1 is operated in a method according to the invention as follows.

The central office, CO, 10 of the optic network 1 transmits optic signals via an optic cable 7 to a first optic terminal 2 and receives optic signals via an optic cable 7 from the first optic terminal 2. The CO 10 may preamplify the optic signals to be transmitted having a power of light of at least 0 dBm.

The first optic terminal 2 forwards the optic signals received from the CO 10 to a second optic terminal 2 and optic signals received from the second optic terminal 2 to the CO 10.

Reference Numerals

1 optic network
10 central office, CO
2 optic terminal
20 first optic receiver, RX, port
21 first optic transmitter, TX, port
22 second optic RX port
23 second optic TX port
24 first optic splitter
25 first optic combiner
26 second optic splitter
27 second optic combiner
28 third optic splitter
29 third optic combiner
3 optic engine
4 digital signal processor, DSP
5 electric plug
6 housing
7 optic cable

**Claims**

1. An optic terminal (2) for an optic network (1), comprising a first optic receiver, RX, port (20), a first optic transmitter, TX, port (21), a second optic RX port (22), a second optic TX port (23), an optic engine (3) connected to the first optic RX port (20), the first optic TX port (21), the second optic RX port (22) and the second optic TX port (23), further comprising an electric plug (5) and a digital signal processor, DSP, (4) connected to the electric plug (5) and the optic engine (3), wherein an input side of a first optic splitter (24) of the optic terminal (2) is connected to the first optic RX port (20) and an output side of the first optic splitter (24) is connected the optic engine (3) and the second optic TX port (23) and an input side of a first optic combiner (25) of the optic terminal (2) is connected to the optic engine (3) and the second optic RX port (23) and an output side of the first optic combiner (25) is connected to the first optic TX port (21).

2. The optic terminal according to claim 1, wherein the input side of the first optic splitter (24) is connected to the first optic RX port (20) via a second optic combiner (27) of the optic terminal (2), an output side of the second optic combiner (27) connected to the input side of the first optic splitter (24) and an input side of the second optic combiner (27) connected to the first optic RX port (20).

3. The optic terminal according to claim 2, wherein the input side of the first optic combiner (25) is connected to the second optic RX port (22) via a second optic splitter (26) of the optic terminal (2), an input side of the second optic splitter (26) connected to the second optic RX port (22) and an output side of the second optic splitter (26) connected to the input side of the first optic combiner (25) and to an input side of the second optic combiner (27).

4. The optic terminal according to claim 3, wherein the output side of the first optic combiner (25) is connected to the first optic TX port (21) via a third optic splitter (28) of the optic terminal (2), an input side of the third optic splitter (28) connected to the output side of the fist optic combiner (25) and an output side of the third optic splitter (28) connected to the first optic TX port (21).

5. The optic terminal according to claim 4, wherein the output side of the first optic splitter (24) is connected to the second optic TX port (23) via a third optic combiner (29) of the optic terminal (2), an output side of the third optic combiner (29) connected to the second optic TX port (23) and an input side of the third optic combiner (29) connected to the output side of the first optic splitter (24) and an output side of the third optic splitter (28).

6. The optic terminal according to one of claims 1 to 5, wherein each optic splitter (24, 26, 28) is configured for providing a splitting ratio of 90/10 or 95/5, and/or each optic splitter (24, 26, 28) and/or each optic combiner (25, 27, 29) is configured as a 3 dB optic coupler.

7. The optic terminal according to one of claims 1 to 6, comprising a housing (6), the optic engine (3), the DSP (4), each optic splitter (24, 26, 28) and each optic combiner (25, 27, 29) arranged within the housing (6) and each optic port (20, 21, 22, 23) and the electric plug (5) arranged on the housing (6).

8. An optic terminal stack for an optic network (1), comprising a plurality of optic terminals (2) according to one of claims 1 to 7, wherein second optic ports (22, 23) of each optic terminal (2) are connected to first optic ports (20, 21) of a successive optic terminal (2).

9. An optic terminal stack arrangement for an optic network (1), comprising at least two optic terminal stacks according to claim 8, wherein second optic ports (22, 23) of a first optic terminal stack are connected to first optic ports (20, 21) of a second optic terminal stack.

10. An optic network (1), comprising a central office, CO, (10) and a pair of optic cables (7) connected to the CO (10) and plugged into first optic ports (20, 21) of an optic terminal (2) according to one of claims 1 to 7.

11. The optic network according to claim 10, wherein the pair of optic cables (7) is plugged into first optic ports (20, 21) of an optic terminal stack according to claim 8.

**12.** The optic network according to claim 10 or 11, wherein the pair of optic cables (7) is plugged into first optic ports (20, 21) of an optic terminal stack arrangement according to claim 9.

**13.** A method for operating an optic terminal (2), wherein

- a first optic splitter (24) of an optic terminal (2) splits an optic signal received from a first optic receiver, RX, port (20) of the optic terminal (2) in a use part and a loop-through part and forwards the use part to an optic engine (3) of the optic terminal (2) and the loop-through part to a second optic terminal, TX, port (23) of the optic terminal (2);
- a first optic combiner (25) of the optic terminal (2) combines respective optical signals received from the optic engine (3) and a second optic RX port (22) of the optic terminal (2) and forwards the combined optical signals to a first optic TX port (21) of the optic terminal (2);
- a digital signal processor, DSP, (4) of the optic terminal (2) converts the use part of the optic signal to an electric signal and provides the electric plug (5) with the electric signal and/or converts an electric signal received from the electric plug (5) to an optic signal and provides the optic engine (3) with the converted optic signal.

**14.** A method for operating an optic network (1), wherein

- a central office, CO, (10) of an optic network (1) transmits optic signals via an optic cable (7) to a first optic terminal (2) and receives optic signals via an optic cable (7) from the first optic terminal (2);
- the first optic terminal (2) forwards the optic signals received from the CO (10) to a second optic terminal (2) and optic signals received from the second optic terminal (2) to the CO (10).

**15.** The method according to claim 14, wherein the CO (10) preamplifies the optic signals to be transmitted having a power of light of at least 0 dBm.

**Amended claims in accordance with Rule 137(2) EPC.**

**1.** An optic terminal (2) for an optic network (1), comprising a first optic receiver, RX, port (20), a first optic transmitter, TX, port (21), a second optic RX port (22), a second optic TX port (23), an optic engine (3) indirectly connected to at least two of the first optic RX port (20), the first optic TX port (21), the second optic RX port (22) and the second optic TX port (23), further comprising an electric plug (5) and a digital signal processor, DSP, (4) connected to the electric plug (5) and the optic engine (3), wherein an input side of a first optic splitter (24) of the optic terminal (2) is connected to the first optic RX port (20) and an output side of the first optic splitter (24) is connected to the optic engine (3) and the second optic TX port (23) and an input side of a first optic combiner (25) of the optic terminal (2) is connected to the optic engine (3) and the second optic RX port (23) and an output side of the first optic combiner (25) is connected to the first optic TX port (21).

**2.** The optic terminal according to claim 1, wherein the input side of the first optic splitter (24) is connected to the first optic RX port (20) via a second optic combiner (27) of the optic terminal (2), an output side of the second optic combiner (27) connected to the input side of the first optic splitter (24) and an input side of the second optic combiner (27) connected to the first optic RX port (20).

**3.** The optic terminal according to claim 2, wherein the input side of the first optic combiner (25) is connected to the second optic RX port (22) via a second optic splitter (26) of the optic terminal (2), an input side of the second optic splitter (26) connected to the second optic RX port (22) and an output side of the second optic splitter (26) connected to the input side of the first optic combiner (25) and to an input side of the second optic combiner (27).

**4.** The optic terminal according to claim 3, wherein the output side of the first optic combiner (25) is connected to the first optic TX port (21) via a third optic splitter (28) of the optic terminal (2), an input side of the third optic splitter (28) connected to the output side of the fist optic combiner (25) and an output side of the third optic splitter (28) connected to the first optic TX port (21).

**5.** The optic terminal according to claim 4, wherein the output side of the first optic splitter (24) is connected to the second optic TX port (23) via a third optic combiner (29) of the optic terminal (2), an output side of the third optic combiner (29) connected to the second optic TX port (23) and an input side of the third optic combiner (29) connected to the output side of the first optic splitter (24) and an output side of the third optic splitter (28).

**6.** The optic terminal according to one of claims 1 to 5, wherein each optic splitter (24, 26, 28) is configured for providing a splitting ratio of 90/10 or 95/5, and/or each optic splitter (24, 26, 28) and/or each optic combiner (25, 27, 29) is configured as a 3 dB optic coupler.

**7.** The optic terminal according to one of claims 1 to 6, comprising a housing (6), the optic engine (3), the DSP (4), each optic splitter (24, 26, 28) and each optic combiner (25, 27, 29) arranged within the housing (6) and each optic port (20, 21, 22, 23) and the electric plug (5) arranged on the housing (6).

8. An optic terminal stack for an optic network (1), comprising a plurality of optic terminals (2) according to one of claims 1 to 7, wherein second optic ports (22, 23) of each optic terminal (2) are connected to first optic ports (20, 21) of a successive optic terminal (2).

9. An optic terminal stack arrangement for an optic network (1), comprising at least two optic terminal stacks according to claim 8, wherein second optic ports (22, 23) of a first optic terminal stack are connected to first optic ports (20, 21) of a second optic terminal stack.

10. An optic network (1), comprising a central office, CO, (10) and a pair of optic cables (7) connected to the CO (10) and plugged into first optic ports (20, 21) of an optic terminal (2) according to one of claims 1 to 7.

11. The optic network according to claim 10, wherein the pair of optic cables (7) is plugged into first optic ports (20, 21) of an optic terminal stack according to claim 8.

12. The optic network according to claim 10 or 11, wherein the pair of optic cables (7) is plugged into first optic ports (20, 21) of an optic terminal stack arrangement according to claim 9.

13. A method for operating an optic terminal (2), wherein

    - a first optic splitter (24) of an optic terminal (2) splits an optic signal received from a first optic receiver, RX, port (20) of the optic terminal (2) in a use part and a loop-through part and forwards the use part to an optic engine (3) of the optic terminal (2) and the loop-through part to a second optic terminal, TX, port (23) of the optic terminal (2);
    - a first optic combiner (25) of the optic terminal (2) combines respective optical signals received from the optic engine (3) and a second optic RX port (22) of the optic terminal (2) and forwards the combined optical signals to a first optic TX port (21) of the optic terminal (2);
    - a digital signal processor, DSP, (4) of the optic terminal (2) converts the use part of the optic signal to an electric signal and provides the electric plug (5) with the electric signal and/or converts an electric signal received from the electric plug (5) to an optic signal and provides the optic engine (3) with the converted optic signal.

14. A method for operating an optic network (1), wherein

    - a central office, CO, (10) of an optic network (1) transmits optic signals via an optic cable (7) to a first optic terminal (2) and receives optic signals via an optic cable (7) from the first optic terminal (2);
    - the first optic terminal (2) forwards the optic signals received from the CO (10) to a second optic terminal (2) and optic signals received from the second optic terminal (2) to the CO (10).

15. The method according to claim 14, wherein the CO (10) preamplifies the optic signals to be transmitted having a power of light of at least 0 dBm.

2

5

3

4

6

24

25

20

21

22

23

**Fig. 1**

2

5

3

4

6

24

25

27

26

28

29

20

21

22

23

**Fig. 2**

Fig. 3

Europäisches
Patentamt
European
Patent Office
Office européen
des brevets

**EUROPEAN SEARCH REPORT**

Application Number

EP 25 15 5060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 210 242 A1 (HUAWEI TECH CO LTD [CN]) 12 July 2023 (2023-07-12) * figure 3 * ----- | 1-15 | INV. H04B10/40 |
| A | US 2017/142503 A1 (TAKEI DAISUKE [JP]) 18 May 2017 (2017-05-18) * paragraph [0053] - paragraph [0056]; figure 5 * ----- | 1-15 | |

TECHNICAL FIELDS
SEARCHED        (IPC)

H04B

The present search report has been drawn up for all claims

| Place of search | Date of completion of the search | Examiner |
|---|---|---|
| Munich | 11 July 2025 | Borsier, Celine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 5060

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | | Publication date | Patent family member(s) | | Publication date |
|---|---|---|---|---|---|
| EP 4210242 | A1 | 12-07-2023 | CN | 114337820 A | 12-04-2022 |
| | | | EP | 4210242 A1 | 12-07-2023 |
| | | | US | 2023239052 A1 | 27-07-2023 |
| | | | WO | 2022068656 A1 | 07-04-2022 |
| US 2017142503 | A1 | 18-05-2017 | JP | 2017092763 A | 25-05-2017 |
| | | | US | 2017142503 A1 | 18-05-2017 |

EPO FORM P0459

For more details about this annex : see Official Journal of the European Patent Office, No. 12/82